# EUROPÄISCHE PATENTSCHRIFT

(11) **EP 2 223 759 B1**
(45) Veröffentlichungstag und Bekanntmachung des Hinweises auf die Patenterteilung: **29.03.2017**
(21) Anmeldenummer: 10001833.2
(22) Anmeldetag: 23.02.2010
(51) Int. Cl.: B23B 31/107, B23B 39/16

(54) **Pinole eines Mehrspindelaggregats mit einer Werkzeugaufnahme**
Barrel of a multiple spindle system with a tool holder
Fourreau d'un agrégat à plusieurs broches doté d'une cavité

(30) Priorität: 26.02.2009 DE 102009010389
(43) Veröffentlichungstag der Anmeldung: 01.09.2010
(73) Patentinhaber: Benz GmbH, Werkzeugsysteme, 77716 Haslach (DE)
(72) Erfinder: Kimmig, Clemens, 77728 Oppenau (DE); Sturm, Gotthilf, 72293 Glatten-Neuneck (DE)
(74) Vertreter: Thämer, Wolfgang

(56) Entgegenhaltungen:
- DE-A1- 19 950 715
- DE-C- 962 034
- JP-A- 2003 231 010
- US-A- 4 638 537
- US-A- 5 011 344
- US-A- 5 954 347

## Beschreibung

Die Erfindung betrifft eine Pinole eines Mehrspindelaggregats gemäß dem Oberbegriff des Anspruchs 1, mit einer Spindel und einer Werkzeugaufnahme zur lösbaren Aufnahme eines Werkzeugs über dessen Schaft, wobei die Werkzeugaufnahme einen mit einer Aufnahmebohrung versehenen Grundkörper aufweist, auf dessen radialer Außenfläche zumindest bereichsweise eine Schiebehülse längsverschiebbar gelagert ist und wobei in einer die Aufnahmebohrung und die Schiebehülse verbindende Ausnehmung ein Klemmelement angeordnet ist, das durch ein klemmendes Verschieben der Schiebehülse gegen den Schaft gepresst wird.

Aus der DE 199 15 821 C2 ist eine an einer Spindel anschraubbare Werkzeugaufnahme bekannt, die über ein von einer Schiebehülse zustellbares Klemmelement verfügt. Das Klemmelement ist hier eine Klemmkugel.

Aus der US 4 638 537 A ist eine Spindel mit einer fest eingebauten Werkzeugaufnahmehülse bekannt. Die Werkzeugaufnahmehülse hat einen Innenkonus, der zur Aufnahme eines Werkzeuges über dessen Außenkonus dient. Die Werkzeugaufnahmehülse ist in die Einsteckbohrung, die vorn ein Innengewinde aufweist, tiefenverstellbar eingeschraubt und mit einer Kontermutter gesichert. Die Spindel hat eine Ausnehmung in der ein Arretierkeil sitzt. Letzterer ist mittels einer Schiebehülse gegen die Werkzeugaufnahmehülse pressbar. Wird die Schiebehülse in Richtung Werkzeug verschoben, drückt der Arretierkeil so gegen die Werkzeugaufnahmehülse, dass diese unter Eigenverformung das Werkzeug festklemmt. Der vorliegenden Erfindung liegt daher die Problemstellung zugrunde, eine eine Werkzeugaufnahme tragende Pinole zu entwickeln, mit der das Werkzeug bei hoher Rundlaufgenauigkeit und großer Formsteifigkeit sicher aufgenommen wird. Auch soll die Pinole und ihre Werkzeugaufnahme nur wenige Bauteile umfassen und ein Werkzeugwechsel einfach zu handhaben sein.

Diese Problemstellung wird mit den Merkmalen des Hauptanspruchs gelöst. Dazu ist der Grundkörper der Werkzeugaufnahme an der Spindel angeformt. Das Klemmelement kommt am Schaft des Werkzeugs und an der Schiebehülse jeweils über mindestens eine zumindest annähernd ebene, viereckige oder mindestens eine zumindest annähernd elliptische Kontaktfläche zur Anlage.

Der Erfindungsgegenstand ist eine Pinole mit einer Spindel und einer Werkzeugaufnahme, wobei die Spindel und der Grundkörper der Werkzeugaufnahme aus einem Teil gefertigt sind. Durch diese einteilige Fertigung werden Rundlaufabweichungen vermieden, die das reguläre lösbare Kuppeln von Spindel und Werkzeugaufnahme zwangsläufig mit sich bringt.

Die Werkzeugaufnahme umfasst neben z.B. sechs Kleinteilen, deren einzelne Massen im unteren Grammbereich liegen, nur zwei große Teile: den Grundkörper und die Schiebehülse. In einer Ausführungsform sind beide Teile Drehteile, deren Symmetrieachsen auf der Mittellinie der Spindel bzw. der Pinole liegen. Da zudem das größte Kleinteil, das Klemmelement, nahezu vollständig in einer speziellen Querausnehmung des Grundkörpers sitzt, ist die Unwucht der Kombination aus Spindel und Werkzeugaufnahme - auch ohne spezielles Auswuchten - minimal. Dies ermöglicht - neben einer gleichförmigen Formsteifigkeit - eine optimale Laufruhe, die sich positiv auf die Bearbeitungsgenauigkeit und die Lagerlebensdauer auswirkt.

Durch die besondere Gestaltung des Klemmelements sind die die Klemmkraft übertragenden Kontaktflächen überdurchschnittlich groß. Entsprechend entstehen dort beim Klemmen vergleichsweise niedrige Flächenpressungen. Dadurch ergibt sich auch bei häufigem Werkzeugwechseln ein kaum messbarer Verschleiß in Form von plastischer Abplattung oder Abrasion am Klemmelement und an der Schiebehülse.

Weitere Einzelheiten der Erfindung ergeben sich aus den Unteransprüchen und den nachfolgenden Beschreibungen schematisch dargestellter Ausführungsbeispiele.
- Figur 1:: Werkzeugaufnahme mit Werkzeug;
- Figur 2:: Pinole mit Werkzeug im Längsschnitt;
- Figur 3:: Werkzeugaufnahme beim Einstecken des Werkzeugs;
- Figur 4:: wie Figur 3, jedoch mit montiertem Werkzeug;
- Figur 5:: Schnitt zu Figur 4;
- Figur 6:: Werkzeugaufnahme mit zylindrischem Klemmelement beim Einstecken des Werkzeugs;
- Figur 7:: wie Figur 6, jedoch mit montiertem Werkzeug;
- Figur 8:: Schnitt zu Figur 7;
- Figur 9:: perspektivische Unteransicht des Klemmelements aus den Figuren 3 bis 4;
- Figur 10:: perspektivische Oberansicht des Klemmelements aus den Figuren 3 bis 4;
- Figur 11:: Schnitt zu Figur 7, jedoch mit tonnenförmigem Klemmelement;
- Figur 12:: Teildraufsicht auf den Grundkörper zu Figur 4;
- Figur 13:: wie Figur 4, jedoch mit einer Federraumabdichtung.

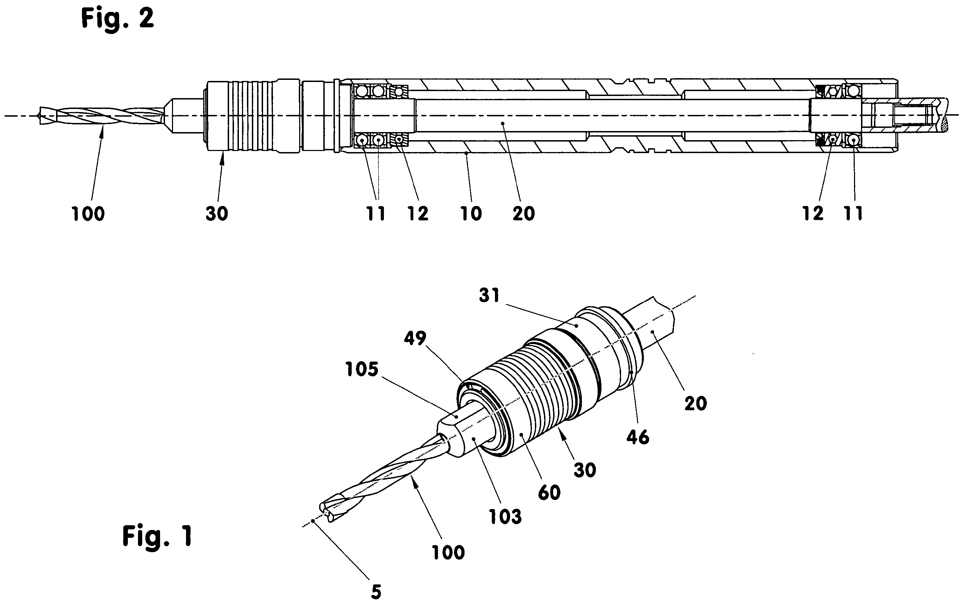

Die Figur 1 zeigt eine ein Werkzeug (100) tragende Pinole (10), wie sie z.B. in Mehrspindelbohrköpfen verwendet wird. Eine derartige Pinole (10) lagert antreibbar eine Spindel (20), an deren freien Ende eine Werkzeugaufnahme (30) befestigt ist. Die Pinole (10) ist z.B. pneumatisch oder hydraulisch antreibbar im Gehäuse des entsprechenden Mehrspindelbohrkopfes gelagert. Wird das Werkzeug einer Pinole (10) des Mehrspindelbohrkopfes zum Bearbeiten eines bestimmten Werkstückes benötigt, wird die Pinole (10) z.B. um 60 mm aus dem Mehrspindelbohrkopf ausgefahren, um dann über diesen in Richtung Werkstück zugestellt zu werden. Nach dem Beendigen des Arbeitsganges werden der Mehrspindelbohrkopf und die Pinole (10) gleichzeitig oder hintereinander jeweils zurück in die entsprechende Ausgangsposition gefahren.

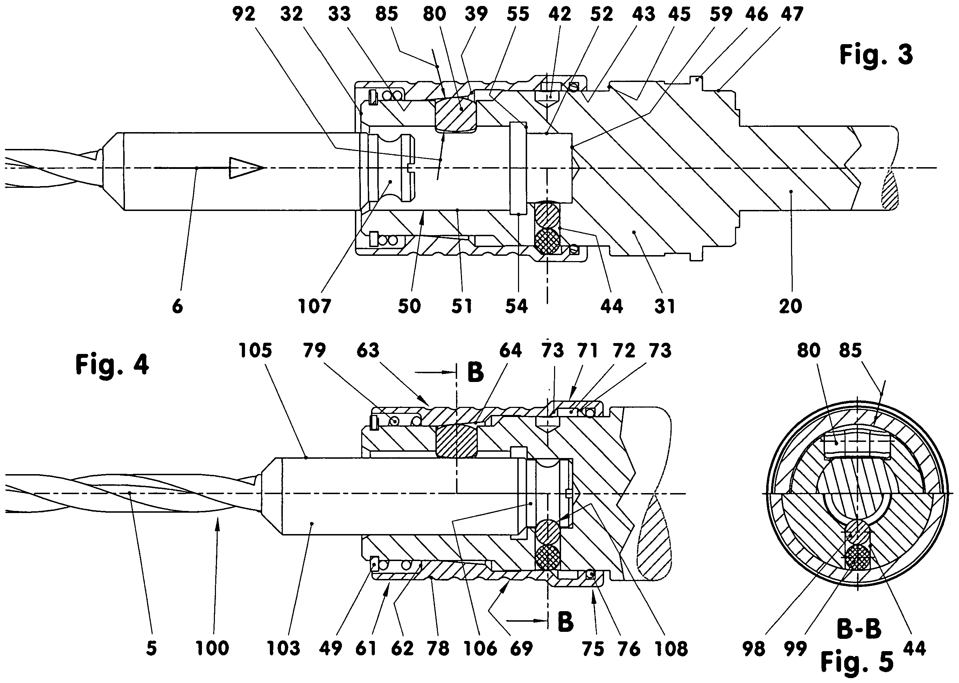

Das Werkstück (100), vgl. Figuren 1 und 4, ist z.B. ein 5er-Holzbohrer mit einem abgesetzten 10mm-Schaft (103). Der zylindrische Schaft (103) hat eine ebene Abflachung (105), die parallel zur Mittellinie (5) ausgerichtet ist, vgl. Figur 4. Der Abstand zwischen der Abflachung (105) und der Mittellinie (5) beträgt z.B. 4,2 mm. An seinem hinteren Ende hat der Schaft einen Fixierkopf (106), der eine umlaufende Ringnut (107) aufweist. Der Einzelquerschnitt der Ringnut (107) hat die Form eines Kreisabschnittes, dessen Bogenhöhe ca. 25% des Kreisdurchmessers beträgt.

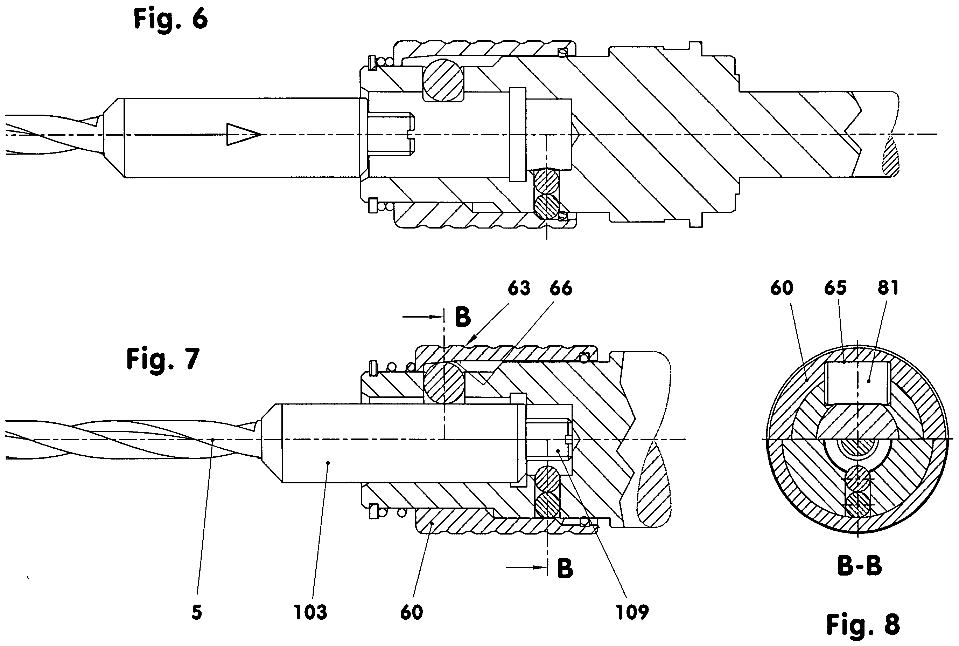

Anstelle des Fixierkopfes (106) kann auch ein z.B. selbstsichernder Gewindestift (109) verwendet werden, der in einer rückseitigen Gewindebohrung des Schaftes (103) eingeschraubt ist, vgl. Figuren 6 und 7.

Nach Figur 1 lagert die Pinole (10) über z.B. drei Rillenkugellager (11) und zwei Axiallager (12) die Spindel (20). Am vorderen Ende der Spindel (20) ist der Grundkörper (31) der Werkzeugaufnahme (30) angeformt, vgl. Figur 3. Die Spindel (20) hat einen maximalen Durchmesser von 10 mm.

Der Grundkörper (31) ist ein Drehteil, das eine zentrale sacklochartige Aufnahmebohrung (50) aufweist, die an der vorderen Stirnfläche (32) des Grundkörpers (31) beginnt. Er hat einen maximalen Durchmesser von ca. 22 mm. Die Aufnahmebohrung (50) teilt sich in einen Positionierabschnitt (51) und einen Fixierabschnitt (52) auf. Der vorn angefaste, zylindrische Positionierabschnitt (51) hat im Ausführungsbeispiel einen Durchmesser von 10 mm, während der Durchmesser des Fixierabschnittes (52) nur 8,3 mm beträgt. Zwischen den beiden Abschnitten (51, 52) befindet sich ein Einstich (54), der eine plane Ringfläche (55) aufweist. Diese Ringfläche (55) kann u.a. als Anschlag für Werkzeuge (100) verwendet werden, die weder einen Fixierkopf (106) noch einen Gewindestift (109) haben.

Die beiden vorderen Drittel der radialen Außenfläche des Grundkörpers (31) dienen als Lager- und Gleitfläche für eine handbetätigbare Schiebehülse (60), vgl. Figur 3. Dazu hat die Außenfläche einen vorderen Schiebebereich (33) und einen hinteren Schiebebereich (43). Beide, ca. gleich lange und im Wesentlichen zylindrische, Bereiche (33, 43) haben zusammen eine Länge, die z.B. 2/3 der Grundkörperlänge beträgt. Der vordere Schiebebereich (33) hat einen Durchmesser von z.B. 16 mm, während der hintere Schiebebereich (43) einen Durchmesser von z.B. 18,3 mm hat. Den Übergangsbereich (39) zwischen beiden Bereichen (33, 43) stellt eine 45°-Fase dar.

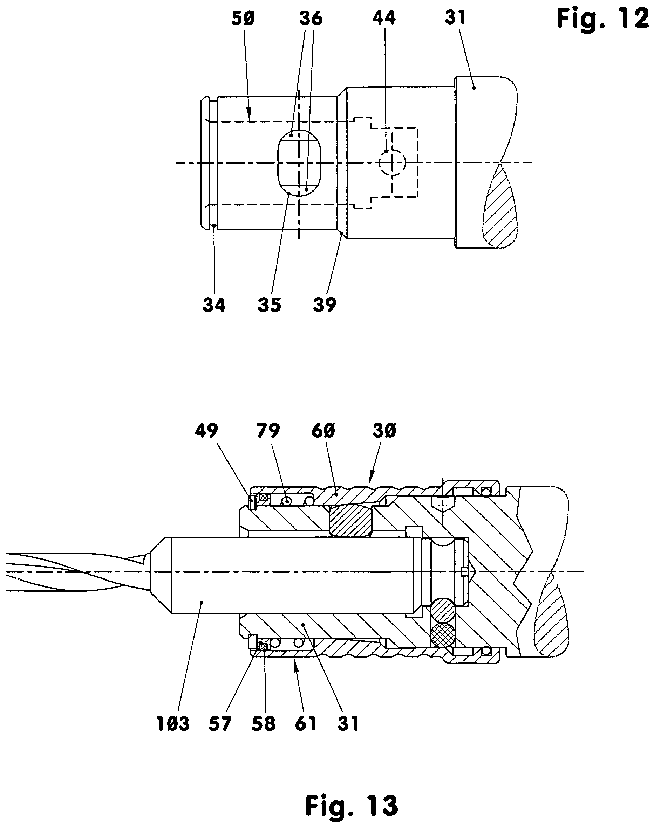

Im vorderen Schiebebereich (33), unmittelbar hinter der Stirnfläche (32), befindet sich eine Ringnut (34), vgl. Figur 12, zur Aufnahme eines Sicherungsringes (49). Zwischen der Ringnut (34) und dem Übergangsbereich (39) ist eine Querausnehmung (35) angeordnet, vgl. auch Figuren 4 und 5. In der Draufsicht, vgl. Figur 12, hat die Querausnehmung (35) die Form einer rechteckigen Fläche, an der an zwei einander gegenüber liegenden Seiten jeweils eine Halbkreisfläche angeschlossen ist. Die Querausnehmung (35) ist z.B. 2 mm kürzer als der Durchmesser des Positionierabschnitts (51). Ihre Breite entspricht dem halben Durchmesser des Positionierabschnitts (51). Die Querausnehmung (35) ist gerade so tief in den Grundkörper (31) eingearbeitet, dass ca. 0,8 mm radial in die Aufnahmebohrung (50) eindringt. Dabei entstehen zwei einander gegenüber liegende Auflageflächen (36). Die einzelne Auflagefläche (36) hat die Form eines Kreisabschnitts, dessen Bogenhöhe z.B. 1,3 mm beträgt. Die durch den Schnitt der Querausnehmung (35) mit dem Positionierabschnitt (51) entstehende Durchdringungskurve befindet zumindest annähernd im mittleren Bereich des Positionierabschnitts (51).

Im hinteren Schiebebereich (43) befindet sich eine radiale Querbohrung (44), die in den Fixierabschnitt (52) der Aufnahmebohrung (50) mündet. Ihr Durchmesser beträgt z.B. 3,05 mm. Im unteren Bereich, also kurz vor der Einmündung in den Fixierabschnitt (52), verengt sich die Querbohrung (44) stufenartig um 0,15 mm im Radius. Nach den Figuren 3 und 6 sitzt die Querbohrung (44) schräg gegenüber der Querausnehmung (35). Es ist auch denkbar, sie gegenüber der jetzigen Position anzubringen, so dass sie in der Zeichnungsebene neben der Querausnehmung (35) positioniert ist.

Beispielsweise gegenüber der Querbohrung (44) befindet sich als Sackloch eine Ausgleichsbohrung (42), vgl. Figuren 3 und 4. Sie dient der Minimierung der Unwucht der Werkzeugaufnahme.

Im hinteren Drittel des Grundkörpers (31) - also außerhalb der Schiebebereiche (33, 43) - hat er z.B. einen mittleren Durchmesser von 20,6 mm. Der Absatz (45) zum hinteren Schiebebereich (43) hin dient als Anschlag. Zwischen dem Absatz (45) und der rückseitigen Stirnfläche, an der die Spindel (20) angeformt ist, befindet sich ein umlaufender Steg (46), der zusammen mit dem anschließenden Zylinderabschnitt (47) mit der vorderen Stirnfläche und dem vorderen Teil der Innenwandung der Pinole (10) einen schmalen Kapillardichtspalt bildet.

Die Schiebehülse (60) ist im Wesentlichen ein rohrförmiges, rotationssymmetrisches Teil mit fünf Funktionszonen. Nach Figur 3 sind die Funktionszonen von links nach rechts: die Federschutzzone (61), die Klemmzone (63), die Hauptgleitzone (69), die Ringkeilzone (71) und die Dichtzone (75).

Die Federschutzzone (61) hat eine z.B. zylindrische Innenwandung, die in einem planen Stützbund (62) endet. Zwischen dem Stützbund (62) und einem in der Ringnut (34) des Grundkörpers (31) eingebauten Sicherungsring (49) ist eine Schraubendruckfeder (79) angeordnet. Der Innendurchmesser der Innenwandung ist geringfügig größer als der maximale Durchmesser des eingebauten Sicherungsringes (49).

Die Klemmzone (63) schließt sich an den Stützbund (62) mit einem ca. 2 mm langen zylindrischen Abschnitt an. Dieser Abschnitt gleitet mit geringem Spiel auf dem vorderen Schiebebereich (33). Er geht über in einen kegelmantelstumpfförmigen Bereich (64), dessen Länge ca. 5,7 mm beträgt und der einen Kegelwinkel von 10 Winkelgraden aufweist. Die gedachte Spitze des Kegelwinkels liegt nach den Figuren 4 und 7 auf der Mittellinie (5) vor der vorderen Werkzeugspitze.

Die Hauptgleitzone (69) ist im Wesentlichen zylindrisch und gleitet mit geringem Spiel auf dem hinteren Schiebebereich (43) des Grundkörpers (31). Zwischen der Hauptgleitzone (69) und dem kegelmantelstumpfförmigen Bereich (64) der Klemmzone (63) befindet sich ein Gehäusebund in Form einer 45°-Fase.

An die Hauptgleitzone (69) schließt sich die Ringkeilzone (71) an. Letztere besteht aus einer z.B. 1 mm tiefen Ringnut (72), deren seitliche Flanken (73) jeweils um z.B. 45 Winkelgrade gegenüber dem zylindrischen Nutgrund geneigt sind.

Die Dichtzone (75) weist eine Ringnut auf, in der ein Dichtring (76) eingelegt ist.

Die Schiebehülse (60) hat über die Funktionszonen (61, 63, 69) einen zumindest annähernd gleichen Außendurchmesser. In diesem Bereich befindet sich eine Rillung (78) aus formgleichen Umlaufrillen, die zudem jeweils mit äquidistantem Abstand benachbart sind. Im Bereich der Ringkeilzone (71) und der Dichtzone (75) ist der Außendurchmesser z.B. um 1,5 mm vergrößert.

In der Querausnehmung (35) nach Figur 3 sitzt ein beispielsweise als Metallspritzgussteil gefertigtes Klemmelement (80), das auch in den Figuren 4, 5, 9 und 10 dargestellt ist. Das Klemmelement (80) hat in der Draufsicht einen Umriss, der dem in Figur 12 dargestellten Querschnitt der Querausnehmung (35) zumindest annähernd entspricht. Nach den Figuren 3 und 4 hat das Klemmelement (80) einen im Wesentlichen rechteckigen Querschnitt, wobei die die Schiebehülse (60) kontaktierende Außenseite (83) stark und die am Werkzeug (100) sich anschmiegende Innenseite (91) schwach gekrümmt ist. Der in der Zeichnungsebene der Figur 4 liegende kleine Krümmungsradius (85) beträgt 5 mm, während der am Werkzeug (100) anliegende Anschmiegeradius (92) doppelt so groß ist.

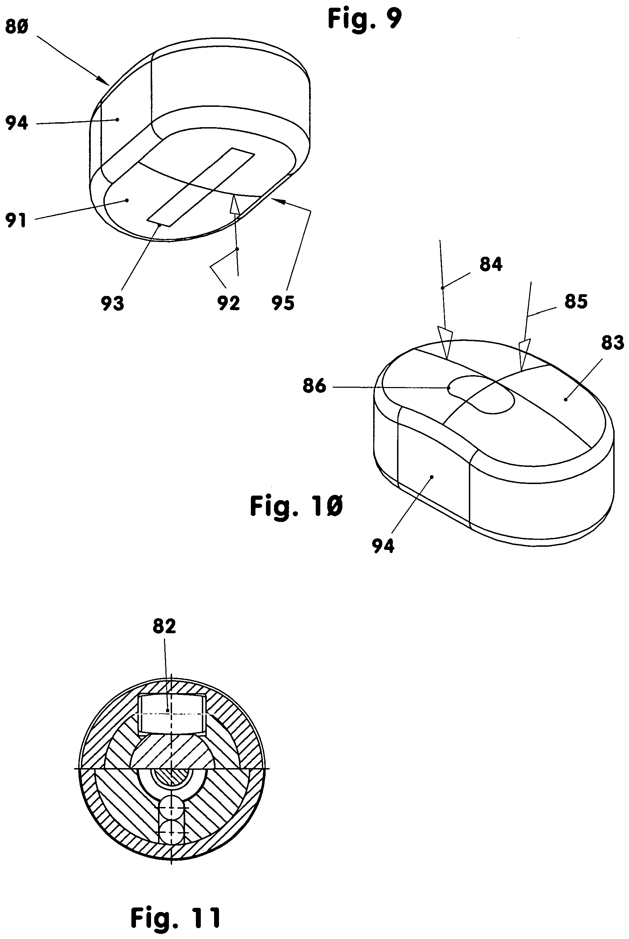

Die Innenseite (91) des Klemmelements (80) ist nur einachsig gekrümmt, vgl. Figur 9. Sie stellt somit ein Teil eines Zylindermantels dar. Im Gegensatz dazu ist die Außenseite (83) des Klemmelements (80) zweiachsig -also sphärisch - gewölbt. Da hier beide Krümmungsradien unterschiedlich groß sind, ist die in Figur 10 dargestellte Außenseite ein Ausschnitt einer Ellipsoidoberfläche. Der große Krümmungsradius (85) liegt hierbei in der in Figur 5 dargestellten Zeichnungsebene, also in einer zur Mittellinie (5) normalen Ebene. Beispielsweise entspricht der Krümmungsradius (85) dem Radius des vorderen Schiebebereichs (33).

Die Seitenwandungen des Klemmelements (80) sind - in der Spindellängsrichtung gesehen - plane, zueinander parallele Flächen, die seitlich mittels zweier Halbzylindermäntel verbunden sind.

Ggf. kann die Außenseite (83) so gegen die Hohlkonusfläche (64) der Klemmzone (63) geneigt sein, dass die vordere Seitenwandung (94) kleiner ist als die hintere (95).

In der Querbohrung (44) des Grundkörpers (31) sitzen hintereinander zwei Rastkugeln (98, 99). Sie haben jeweils einen Durchmesser von z.B. 3 mm. In der Regel werden beide Rastkugeln (98, 99) aus einem Stahl- oder Keramikwerkstoff gefertigt. Es ist auch möglich, die äußere Rastkugel (99) aus einem elastischen Werkstoff herzustellen, z.B. aus Hartgummi oder einem Kunststoff, vgl. Figuren 3 bis 5.

Bei der Montage, vgl. Figur 3, wird zunächst das Klemmelement (80) in die Querausnehmung (35) eingelegt. Dabei füllt es die Querausnehmung (35) nahezu vollständig aus. Dann wird die mit dem Dichtring (76) bestückte Schiebehülse (60) so weit auf den Grundkörper (31) aufgeschoben, bis dessen Hinterkante gerade noch nicht die Querbohrung (44) erreicht hat. Die Schiebehülse (80) ist bei dieser Variante in Umfangsrichtung frei drehbar. Nun werden die beiden Rastkugeln (98, 99) in die Querbohrung (44) eingelegt und die Schiebehülse (60) bis zum Absatz (45) verschoben. Abschließend wird die Schraubendruckfeder (79) in den Freiraum zwischen der Federschutzzone (61) und dem vorderen Ende des Grundkörpers (31) eingelegt, um dann mit dem Einsetzen des Sicherungsrings (49) fixiert zu werden. Die Spannung der Schraubendruckfeder (79) drückt die Schiebehülse (60) der leeren Werkzeugaufnahme (30) gegen den als Anschlag dienenden Absatz (45). Hierbei schließt die Vorderkante der Schiebehülse (60) nahezu bündig mit der Hinterkante des Sicherungsrings (49) ab.

In der Figur 13 wird eine Werkzeugaufnahme (30) gezeigt, bei der der Raum, in dem sich das Federelement (79) befindet, nach außen hin mit einer Dichtung zumindest staubdicht abgedichtet wird. Dazu befindet sich zwischen dem Sicherungsring (49) und dem Federelement (79) beispielsweise ein Stützring (57). Der auf dem Grundkörper (31) sitzende Stützring (57) weist eine umlaufende Ringnut auf, in der ein Dichtring (58) eingelegt ist. Dieser Dichtring (58) liegt dichtend an der Innenwandung der Federschutzzone (61) an. Anstelle der Kombination aus Stützring (57) und Dichtung (58) kann auch eine Kunststoffscheibe mit einer außenliegenden Dichtlippe verwendet werden. Die Dichtlippe liegt dann elastisch an der Innenwandung der Federschutzzone (61) an.

Um das Werkzeug (100) fixieren zu können, wird die Schiebehülse (60) entgegen der Wirkung der Schraubendruckfeder (79) soweit nach vorn gezogen, dass die Schraubendruckfeder (79) einen Block bildet, vgl. hierzu Figur 6. Durch das nach vorne Ziehen der Schiebehülse (60) hat das Klemmelement (80) die maximale Verschiebbarkeit - senkrecht zur Mittellinie (5) - zwischen den Auflageflächen (36) der Querausnehmung (35) und der Hohlkonusfläche (64) der Klemmzone (63) erreicht.

Vergleichbares gilt für die Rastkugel (98, 99). Nach Figur 3 liegt die äußere Rastkugel (99) am Nutgrund der Ringnut (72) der Ringkeilzone (71) an. Somit ragt die innere Rastkugel (98) nicht oder nur minimal in den Fixierabschnitt (52) der Aufnahmebohrung (50) hinein.

Beim Einschieben des Werkzeugschaftes (103) in die Aufnahmebohrung (50) wird das Klemmelement (80) um wenige zehntel Millimeter radial nach außen geschoben. Dies gilt auch für die Rastkugel (98, 99), sofern sie aufgrund der auf sie wirkenden Schwerkraft in den Fixierabschnitt (52) der Aufnahmebohrung (50) hineinragen sollten. Sobald das Werkzeug (100) an der Ringfläche (55) oder am Grund (59) der Aufnahmebohrung (50) anliegt, vgl. Figuren 4 oder 7, wird die Schiebehülse (60) losgelassen. Die Schraubendruckfeder (79) schiebt sie über den Stützbund (62) in Richtung des Absatzes (45). Dabei legt sich die Hohlkonusfläche (64) an der Außenseite (83) des Klemmelements (80) an, um es mit der Innenseite (91) gegen die Abflachung (105) des Schaftes (103) zu pressen. Aufgrund des Kegelwinkels der Hohlkonusfläche (64) entsteht - bei einer Federkraft der Schraubendruckfeder (79) von z.B. 20 N - eine den Schaft (103) klemmende Normalkraft von 180 N.

Nach Figur 9 kontaktiert die Innenseite (91) des Klemmelements (80) die Abflachung des Schaftes (103) theoretisch in einer Linienberührung. Real ist der Kontaktbereich eine viereckige, im Idealfall sogar eine rechteckige Kontaktfläche (93). Gemäß Figur 10 berührt die Außenseite (83) des Klemmelements (80) die Hohlkonusfläche (64) in einer räumlich gekrümmten Ellipse, Oval oder Polygon. Diese räumlich gekrümmte Kontaktfläche (86) ergibt sich nur unter der Bedingung, dass der große - innerhalb der Kontaktfläche (86) gelegene - Krümmungsradius (84) kleiner ist als der dortige mittlere Radius der Hohlkonusfläche (64). Mit zunehmender Klemmwirkung der Werkzeugaufnahme (30) vergrößert sich - auch unabhängig von der temporären Abplattung aufgrund der vorliegenden Flächenpressung - die Kontaktfläche (86), da sich im Kontaktbereich die Krümmung der Hohlkonusfläche (64) mit zunehmendem Schiebehülsenhub an die Krümmung des Klemmelements (80) angleicht. Ist der Krümmungsradius (84) im Berührbereich größer als der der Hohlkonusfläche (64), ergeben sich zwei Kontaktflächen.

Die Hohlkonusfläche (64) kann ggf. auch sphärisch konkav oder konvex gekrümmt sein. In beiden Fällen ist dann die Berührfläche der Klemmzone (63) ein ringförmiger Bereich eines Torus.

Beide Kontaktflächen (86, 93) können einen Flächeninhalt von mehreren Quadratmillimetern erreichen.

Nahezu zeitgleich zur Klemmung durch das Klemmelement (80) fixieren die Rastkugeln (98, 99) nach Figur 4 das Werkzeug (100) über dessen Fixierkopf (106). Die äußere Rastkugel (99) ist dazu über die vordere Flanke der Ringnut (72) auf das Niveau der Hauptgleitzone (69) verschoben worden, um so um den maximalen Versatz in den Fixierabschnitt (52) bewegt zu werden. Hierbei ragt die innere Rastkugel (98) in die Ringnut (107) des Fixierkopfes (106) ein. Dort liegt sie primär am hinteren Flankenbereich (108) an, wodurch der Fixierkopf (106) gegen den Grund (59) der Aufnahmebohrung (50) gepresst wird. Besteht die äußere Rastkugel (99) aus einem elastischen Werkstoff, wie z.B. Hartgummi, ist immer eine Haltefunktion - ohne Rückwirkung auf die Klemmfunktion des Klemmelements (80) - sichergestellt.

Die Figuren 6 bis 8 zeigen eine alternative Konstruktionsvariante. Hier ist das Klemmelement (81) eine Zylinderrolle oder eine Tonne (82), vgl. Figur 11. Zwangsläufig ist folglich die Schiebehülse (60) auch kein rotationsymmetrisches Bauteil.

Die Schiebehülse (60) hat eine Klemmzone (63) mit einer ebenen Klemmfläche (66), die gegenüber der Mittellinie (5) um 5 Winkelgrade geneigt ist. Sie ist als Führungskanal (65) mit rechteckigem Querschnitt, vgl. Figuren 8 und 11, in die Schiebehülse (60) eingearbeitet. An den seitlichen Flanken des Kanals (65) stützt sich das Klemmelement (81, 82) ab.

Auch wird bei dieser Schiebehülse (60) auf die Federschutzzone (61) verzichtet.

Das Werkzeug (100) aus den Figuren 6 und 7 hat anstelle des Fixierkopfes (106) einen selbstsichernden Gewindestift (109). Letzterer hat z.B. ein M5-Gewinde. Die Rastkugeln (98, 99) kommen bei diesem Werkzeug (100) nicht zum Einsatz.

Unter der Wortfolge "zumindest annähernd" werden im Zusammenhang mit den Umrissen der Kontaktflächen Formabweichungen verstanden, die im Bereich von mehreren zehntel Millimeter liegen.

### Bezugszeichenliste:

- 5: Mittellinie der Spindel
- 6: Einschubrichtung für das Werkzeug (100)

- 10: Pinole
- 11: Rillenkugellager
- 12: Axialkugellager

- 20: Spindel

- 30: Werkzeugaufnahme
- 31: Grundkörper
- 32: Stirnfläche, vorn
- 33: Schiebebereich, vorn
- 34: Ringnut
- 35: Querausnehmung, Ausnehmung
- 36: Auflageflächen
- 39: Übergangsbereich

- 42: Ausgleichsbohrung
- 43: Schiebebereich, hinten
- 44: Querbohrung
- 45: Absatz, Anschlag
- 46: Steg, umlaufend
- 47: Zylinderabschnitt
- 49: Sicherungsring

- 50: Aufnahmebohrung
- 51: Positionierabschnitt
- 52: Fixierabschnitt
- 54: Einstich
- 55: Ringfläche
- 57: Stützring
- 58: Dichtring
- 59: Grund der Aufnahmebohrung

- 60: Schiebehülse
- 61: Federschutzzone
- 62: Stützbund
- 63: Klemmzone
- 64: Hohlkonusfläche, Bereich
- 65: Führungskanal
- 66: Klemmfläche, eben
- 69: Hauptgleitzone
- 71: Ringkeilzone
- 72: Ringnut
- 73: Flanken
- 75: Dichtzone
- 76: Dichtring
- 78: Rillung
- 79: Schraubendruckfeder, Federelement

- 80: Klemmelement mit ovalem Horizontalquerschnitt
- 81: Klemmelement, zylindrisch
- 82: Klemmelement, tonnenförmig
- 83: Außenseite von (80)
- 84: Krümmungsradius, groß
- 85: Krümmungsradius, klein
- 86: Kontaktfläche, Außenseite

- 91: Innenseite von (80)
- 92: Anschmiegeradius
- 93: Kontaktfläche, Innenseite
- 94: Seitenwandung, plan, vorn
- 95: Seitenwandung, plan, hinten

- 98: Rastkugel, innen, Fixierelemente
- 99: Rastkugel, außen, Fixierelemente

- 100: Werkzeug, Bohrer
- 103: Schaft
- 105: Abflachung
- 106: Fixierkopf
- 107: Ringnut
- 108: Flankenbereich, hinten
- 109: Gewindestift, selbstsichernd

## Patentansprüche

1. Pinole eines Mehrspindelaggregats mit einer Spindel (20) und einer Werkzeugaufnahme (30) zur lösbaren Aufnahme eines Werkzeuges (100) über dessen Schaft (103),
- wobei die Werkzeugaufnahme (30) einen mit einer Aufnahmebohrung (50) versehenen Grundkörper (31) aufweist, auf dessen radialer Außenfläche zumindest bereichsweise eine Schiebehülse (60) längsverschiebbar gelagert ist,
und
- wobei in einer die Aufnahmebohrung (50) und die Schiebehülse (60) verbindende Ausnehmung (35) ein Klemmelement (80-82) angeordnet ist, das durch ein klemmendes Verschieben der Schiebehülse (60) gegen den Schaft (103) gepresst wird,
- **dadurch gekennzeichnet dass** der Grundkörper (31) an der Spindel (20) angeformt ist und
- wobei das Klemmelement (80-82) am Schaft (103) und an der Schiebehülse (60) jeweils über mindestens eine zumindest annähernd ebene, viereckige oder mindestens eine zumindest annähernd elliptische Kontaktfläche (86, 93) zur Anlage kommt.

2. Pinole gemäß Anspruch 1, **dadurch gekennzeichnet, dass** das Klemmelement (80) der Werkzeugaufnahme (30) zum Schaft (103) des Werkzeugs (100) hin eine zylindrische Wölbung und zur Schiebehülse (60) hin eine sphärische Wölbung aufweist.

3. Pinole gemäß Anspruch 2, **dadurch gekennzeichnet, dass** die sphärische Wölbung zwei verschieden große Krümmungsradien (84, 85) aufweist, wobei der Krümmungsradius (84), der in einem normal zur Mittellinie (5) der Spindel (20) gelegenen Querschnitt liegt, der größere ist.

4. Pinole gemäß Anspruch 1, **dadurch gekennzeichnet, dass** die Schiebehülse (60) der Werkzeugaufnahme (30) eine Klemmzone (63) aufweist, die an der Innenwandung der Schiebehülse (60) eine zur Mittellinie (5) der Spindel (20) um 2,5 bis 10 Winkelgrade geneigte Fläche (64, 66) hat.

5. Pinole gemäß Anspruch 1, **dadurch gekennzeichnet, dass** die Schiebehülse (60) der Werkzeugaufnahme (30) ein rotationssymmetrisches Bauteil ist, deren Symmetrielinie die Mittellinie (5) der Spindel (20) ist.

6. Pinole gemäß Anspruch 1, **dadurch gekennzeichnet, dass** der Grundkörper (31) der Werkzeugaufnahme (30) eine Querbohrung (44) aufweist, in der - zum Fixieren des Werkzeugs (100) - zwei hintereinander liegende Rastkugeln (98, 99) angeordnet sind.

7. Pinole gemäß Anspruch 6, **dadurch gekennzeichnet, dass** die Rastkugel (99), die an der Schiebehülse (60) anliegt, aus einem elastischen Werkstoff gefertigt ist, dessen E-Modul kleiner als 20000 N/mm² ist.

8. Pinole gemäß Anspruch 6, **dadurch gekennzeichnet, dass** die Härte der Rastkugel (99) 80 Shore-A aufweist.

9. Pinole gemäß Anspruch 1, **dadurch gekennzeichnet, dass** die zumindest annähernd ebene, viereckige Kontaktfläche (93) theoretisch eine Linienberührung darstellt.

10. Pinole gemäß Anspruch 1, **dadurch gekennzeichnet, dass** die zumindest annähernd elliptische Kontaktfläche (86) theoretisch eine Punktberührung darstellt.

## Claims

1. Tool holder in a multi-spindle unit comprising a spindle (20) and tool receiving means (30), said holder adapted to releasably receive a tool (100) at the shaft (103) thereof, with
- the tool receiving means (30) comprising a body (31) having a receiving bore (50) extending therethrough, said body adapted to have a sliding sleeve (60) mounted for longitudinal movement on at least portions of its radial outer surface, and
- a clamping member (80 - 82) disposed in a recess (35) connecting the receiving bore (50) and the sliding sleeve (60), said clamping member being urged against the shaft (103) by clampingly displacing the sliding sleeve (60);
**characterized in that**
- the body (31) is formed to be integral with the spindle (20) and
- the clamping member (80 - 82) engages the shaft (103) and the sliding sleeve (60) via contact surfaces (86, 93) of which at least one is at least approximately planar and rectangular or of which at least one is at least approximately elliptic in shape.

2. Tool holder as claimed in claim 1, **characterized in that** the clamping member (80 - 82) of the tool receiving means (30) is cylindrically curved towards the shaft (103) of the tool (100) and spherically curved towards sliding sleeve (60).

3. Tool holder as claimed in claim 2, **characterized in that** the spherical curvature has two different radii (84, 85), with the longer radius of curvature (84) extending in a cross section normal to the centre line (5) of the spindle (20).

4. Tool holder as claimed in claim 1, **characterized in that** the sliding sleeve (60) of the tool receiving means (30) comprises a clamping zone (63) which has on the inner wall of sliding sleeve (60) an area (64, 66) inclined towards centre line (5) of the spindle (20) by an angle of 2.5 to 10 degrees.

5. Tool holder as claimed in claim 1, **characterized in that** the sliding sleeve (60) of the tool receiving means (30) is a component having rotational symmetry of which the line of symmetry is the centre line (5) of the spindle (20).

6. Tool holder as claimed in claim 1, **characterized in that** the body (31) of the tool receiving means (30) has a bore extending transversely therethrough in which a pair of detent balls (98, 99) are placed in a row for holding the tool (100) in place.

7. Tool holder as claimed in claim 6, **characterized in that** the detent ball (99) engaging sliding sleeve (60) is made of a resilient material having a Young's modulus lower than 20.000 N/mm².

8. Tool holder as claimed in claim 6, **characterized in that** its detent ball (99) has a Shore-A hardness of 80.

9. Tool holder as claimed in claim 1, **characterized in that** the at least approximately planar rectangular contact surface (93) in theory constitutes a line contact.

10. Tool holder as claimed in claim 1, **characterized in that** the at least approximately elliptic contact surface (86) in theory constitutes a point contact.

## Revendications

1. Fourreau d'une unité d'usinage multibroche comprenant une broche (20) et un mandrin (30) pour la réception amovible d'un outil (100) par la queue (103) de ce dernier,
- le mandrin (30) présentant un corps de base (31) pourvu d'un alésage de réception (50) sur la surface extérieure radiale duquel un manchon coulissant (60) est placé, au moins par endroits, de manière à pouvoir coulisser longitudinalement, et
- un élément de serrage (80-82) étant disposé dans un évidement (35) reliant l'alésage de réception (50) au manchon coulissant (60), qui est pressé contre la queue (103) par un déplacement du manchon coulissant (60) avec serrage,
**caractérisé en ce que** le corps de base (31) est ménagé sur la broche (20) et
- l'élément de serrage (80-82) venant en appui sur la queue (103) et sur le manchon coulissant (60) avec au moins une surface de contact (86, 93) au moins approximativement plane et carrée ou au moins approximativement elliptique.

2. Fourreau selon la revendication 1, **caractérisé en ce que** l'élément de serrage (80) du mandrin (30) présente une courbure cylindrique vers la queue (103) de l'outil (100) et une courbure sphérique vers le manchon coulissant (60).

3. Fourreau selon la revendication 2, **caractérisé en ce que** la courbure sphérique a deux rayons de courbure différents (84, 85), le rayon de courbure (84) qui se trouve dans une section transversale disposée normalement par rapport à la ligne médiane (5) de la broche (20) étant le plus grand.

4. Fourreau selon la revendication 1, **caractérisé en ce que** le manchon coulissant (60) du mandrin (30) comporte une zone de serrage (63) qui présente à la paroi intérieure du manchon coulissant (60) une surface inclinée (64, 66) de 2,5 à 10 degrés par rapport à la ligne centrale (5) de la broche (20).

5. Fourreau selon la revendication 1, **caractérisé en ce que** le manchon coulissant (60) du mandrin (30) est un composant à rotation symétrique dont la ligne de symétrie est la ligne centrale (5) de la broche (20).

6. Fourreau selon la revendication 1, **caractérisé en ce que** le corps de base (31) du mandrin (30) présente un alésage transversal (44) où sont logées deux billes d'encliquetage (98, 99), placées l'une derrière l'autre, pour la fixation de l'outil (100) .

7. Fourreau selon la revendication 6, **caractérisé en ce que** la bille d'encliquetage (99) qui est placée contre le manchon coulissant (60) est fabriquée en un matériau élastique dont le module d'élasticité est inférieur à 20000 N/mm².

8. Fourreau selon la revendication 6, **caractérisé en ce que** la dureté de la bille d'encliquetage (99) est de 80 Shore A.

9. Fourreau selon la revendication 1, **caractérisé en ce que** la surface de contact au moins approximativement plane et carrée (93) théoriquement présente un contact linéaire.

10. Fourreau selon la revendication 1, **caractérisé en ce que** la surface de contact au moins approximativement elliptique (86) théoriquement présente un contact ponctuel.
